# EUROPÄISCHE PATENTSCHRIFT

(11) **EP 2 539 383 B1**
(45) Veröffentlichungstag und Bekanntmachung des Hinweises auf die Patenterteilung: **11.12.2013**
(21) Anmeldenummer: 11703618.6
(22) Anmeldetag: 15.02.2011
(51) Int. Cl.: C08F 220/28

(54) **POLYMERE UND IHRE VERWENDUNG ALS DISPERGIERMITTEL MIT SCHAUMHEMMENDER WIRKUNG**
POLYMERS AND USE THEREOF AS DISPERSANTS HAVING A FOAM-INHIBITING EFFECT
POLYMÈRES ET LEUR UTILISATION EN TANT QUE DISPERSANTS À EFFET ANTI-MOUSSE

(30) Priorität: 26.02.2010 DE 102010009493
(43) Veröffentlichungstag der Anmeldung: 02.01.2013
(73) Patentinhaber: Clariant Finance (BVI) Limited, Road Town, Tortola (VG)
(72) Erfinder: SCHAEFER, Carsten, 84453 Mühldorf (DE); MOGCK, Oliver, 84508 Burgkirchen (DE)
(74) Vertreter: Mikulecky, Klaus
(86) Internationale Anmeldenummer: PCT/EP2011/000684
(87) Internationale Veröffentlichungsnummer: WO 2011/103970

(56) Entgegenhaltungen:
- WO-A1-01/96517
- WO-A2-02/066528
- US-B1- 6 582 510

## Beschreibung

Die vorliegende Erfindung betrifft Polymere mit schaumhemmender Wirkung sowie deren Herstellung, und ihre Verwendung als Dispergiermittel für anorganische Feststoffsuspensionen, insbesondere Pigmentsuspensionen, Plastifizier- und Fliessmittel für hydraulische Zementsysteme, Beton, Mörtel, Gipssuspensionen und Gipsanhydritbindemittelformulierungen, für keramische Massen aus Tonen, Kaolinen, Feldspäten und Quarzgestein und für Pigmentpräparationen von anorganischen Weiß- und Buntpigmenten in der Farben- und Lackindustrie, Lederindustrie und als Kalksteinverhinderer, Dispergier- und Sequestriermittel in der Wasch- und Reinigungsmittelindustrie und die Wasseraufbereitung. Die erfindungsgemäßen Polymere zeichnen sich dadurch aus, dass ein Zusatz eines Entschäumers zu der Formulierung nicht notwendig ist. Bei der Herstellung des Polymers wird ein zusätzliches Monomer verwendet, das die entschäumende Wirkung bewirkt.

Feststoffsuspensionen enthalten üblicherweise zur Verflüssigung und Dispergierung der anorganischen Feststoffe Dispergier- oder Fließmittel. Derartige Feststoffe können Zement, Gips, Gipshalbhydrat, Flugasche, Kaolin in der Bauindustrie, Titandioxid, Calciumcarbonat, Talkum, Bariumsulfat, Zinksulfit, Bismutvanadat, Eisenoxidpigmente, Chromdioxid, Cobaltspinellpigmente und andere anorganische Buntpigmente in der Farben und Lackindustrie sein. Auch keramischen Massen von Tonen, Kaolinen, Feldspäten und Quarzgestein werden Dispergiermittel zusammen mit Soda und/oder Wasserglas zugesetzt, um die Verarbeitbarkeit zu ermöglichen und den Grünling in die Gipsform zu pressen.

Zum Dispergieren von Kaolin, Titandioxid und Calciumcarbonat werden üblicherweise niedrigmolekulare Polymerisate aus Acrylsäure oder Copolymere aus Acrylsäure und Maleinsäure und deren Natrium, Kalium oder Ammoniumsalze eingesetzt.

In der Bauindustrie werden üblicherweise zum Verflüssigen der Betone für die Fertigung von Bodenbelägen, Betonsteinen, für Transportbeton und Leichtbeton Fliessmittel verwendet.

Natriumligninsulfonat ist ein übliches Fliessmittel für Zement in hydraulisch bindenden Baustoffzusammensetzungen und für Gipshalbhydrat in Putzen, Mauermörtelmassen, Gipsplatten und für Anhydritestriche.

DE-A-1 238 831 beschreibt ein Dispergiermittel für Zement, das durch Kondensation von Naphthalinsulfonsäurederivaten und Formaldehyd hergestellt wird.

DE-A-1 671 017 beschreibt die Verwendung von sulfongruppenhaltigen Melaminharzen als Fliessmittel für Beton.

DE-A-2 948 698 beschreibt hydraulische Mörtel für Estriche, die Fliessmittel auf Basis von Melamin-Formaldehyd-Kondensationsprodukten und/oder sulfonierte Formaldehyd-Naphthalinkondensate und/oder Ligninsulfonat und als Binder zusammengemahlenen Portlandzement, tonhaltigen Kalkmergel, Ton- und Schwachbrandklinker enthalten.

DE-A-3 530 258 beschreibt die Verwendung von wasserlöslichen Natriumnaphthalinsulfonsäure - Formaldehydkondensaten als Zusatzmittel für anorganische Bindemittel und Baustoffe. Diese Zusatzmittel werden zur Verbesserung der Fliessfähigkeit der Bindemittel wie z. B. Zement, Anhydrit oder Gips sowie den damit hergestellten Baustoffen beschrieben.

Neben den rein anionischen Dispergiermitteln, die im Wesentlichen Carbonsäure- und Sulfonsäuregruppen enthalten, werden schwach anionische Kammpolymere beschrieben, die üblicherweise anionische Ladungen an der Hauptkette tragen und nichtionische Polyalkylenglykolseitenketten enthalten.

WO-A-01/96007 beschreibt diese schwach anionischen Dispergier- und Mahlhilfsmittel für wässrige Mineralsuspensionen, die durch radikalische Polymerisation von Vinylgruppen enthaltenden Monomeren hergestellt werden und die als eine Hauptkomponente Polyalkylenoxidgruppen enthalten.

DE-A-19 513 126 und DE-A-19 834 173 beschreiben Copolymere auf Basis von ungesättigten Dicarbonsäurederivaten und Oxyalkylenglykol-Alkenylethern und deren Verwendung als Zusatzmittel für hydraulische Bindemittel, insbesondere Zement.

DE-A-10 017 667 beschreibt die Verwendung ähnlicher Copolymere mit vinylfunktionalisierten Polyethern zur Herstellung wässriger Pigmentpräparationen. Diese Copolymere werden durch radikalische Polymerisation von u. a. Vinylpolyalkylenlgykolether und Maleinsäureanhydrid und weiteren Monomeren hergestellt und eignen sich zum Dispergieren von organischen und anorganischen Pigmenten, Füllstoffen und zur Herstellung von Pigmentkonzentraten, -pasten und -präparationen.

Ziel der Zugabe von Fliessmitteln in der Bauindustrie ist entweder die Plastizität des Betons zu erhöhen oder die benötigte Wassermenge für das Gemisch aus Zementleim, Flugasche und Zuschlagstoffen bei gleicher Verarbeitungsbedingung zu reduzieren.

Es hat sich gezeigt, dass Fliessmittel auf Basis von Ligninsulfonat, Melaminsulfonat und Polynaphthalinsulfonat den schwach anionischen, polyalkylenglykoletherhaltigen Copolymeren in ihrer Wirksamkeit unterlegen sind. Diese Copolymere werden in der Bauindustrie auch als Polycarboxylatether (PCE) bezeichnet. Die Informationsbroschüre "Modern Superplasticisers in Concrete Technology, Januar 2007" des Vereins Deutsche Bauchemie e.V., Frankfurt am Main beschreibt die Verwendung und die Vorteile dieser Polycarboxylatether.

Polycarboxylatether dispergieren die anorganischen Pigmentpartikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenglykoletherseitenketten, die durch Absorption von Wassermolekülen eine stabilisierende Schutzschicht um das Pigmentpartikel bilden.

Dadurch kann entweder die benötige Menge Wasser für das Einstellen einer bestimmten Konsistenz gegenüber den klassischen Fliessmitteln reduziert werden oder aber die Plastizität der feuchten Baustoffmischung wird durch die Zugabe der Polycarboxylatether so weit reduziert, dass selbstverdichtender Beton bei niedrigen Wasser/Zement-Verhältnissen hergestellt werden kann. Auch ermöglicht die Verwendung der Polycarboxylatether die Herstellung von Transportbeton, der über längere Zeiträume pumpbar bleibt oder die Herstellung von hochfesten Betonen durch die Einstellung eines niedrigen Wasser/Zement-Verhältnisses.

Es ist daher nicht verwunderlich, dass die Industrie weiterhin auf der Suche nach geeigneten Polymeren ist, die sich für den Einsatz als Betonverflüssiger und Dispergiermittel für anorganische Pigmente eignen.

WO-A-02/066528 beschreibt ein solches Dispergiermittel, dass sich als wasserreduzierendes Hilfsmittel für Beton eignet. Insbesondere werden für die Herstellung des Dispergiermittels Macromonomere eingesetzt, die durch Alkoxylierung von Hydroxyalkylacrylaten und -methacrylaten in Gegenwart von DMC(double metal cyanide)-Katalysatoren verfügbar sind.

In vielen Formulierungen ist ein Zusatz eines Entschäumers notwendig. Jedoch führt die Zugabe von Entschäumern häufig zu nachteiligen Effekten. Bei Pigmentpräparationen treten hier häufig Oberflächendefekte (z. B. Krater) und schlechte Verlauf- und Fließeigenschaften (z. B. Orangenhaut) auf, worauf hin oft mehr Tenside eingesetzt werden müssen, um diese durch die Entschäumer hervorgerufenen Probleme zu beseitigen. Auch beim Einsatz der bekannten Kammpolymere als Verflüssiger im Beton kann auf die Zugabe von Entschäumern nicht verzichtet werden. Aufgrund der kammartigen tensidischen Struktur dieser Polymere beim Einarbeiten kann eine beträchtliche Menge an Luft in mineralische Baustoffe eingeführt werden. Durch solche Luftporen werden im Beton Hohlräume gebildet, was zu einer Verschlechterung der mechanischen Eigenschaften und Beständigkeit des Betons führen kann.

Viele Entschäumer neigen außerdem zur Separation, da sie in der Regel nicht löslich in den Formulierungen sind. Hierzu gehören Entschäumer, die auf Mineralölen oder Siliconöl basieren.

Aufgabe vorliegender Erfindung war es demzufolge, verbesserte Polymere aufzufinden, die sich für den Einsatz als Betonverflüssiger und Dispergiermittel für anorganische Pigmente eignen, indem durch den Einsatz eines zusätzlichen Polymerbausteins die Schaumbildung verhindert wird und somit der Einsatz eines Entschäumers überflüssig wird.

Gegenstand der Erfindung sind Polymere, enthaltend Struktureinheiten, die aus den Monomeren (A), (B), und (D), und gegebenenfalls (C) abgeleitet sind, wobei
(A) ein Monomer der Formel (I) ist 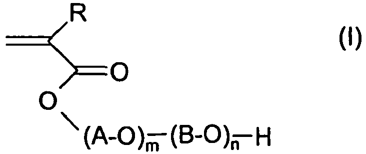 worin
   - A: für C₂- bis C₄-Alkylen,
   - B: für ein von A verschiedenes C₂- bis C₄-Alkylen,
   - R: für Wasserstoff oder Methyl,
   - m: für eine Zahl von 1 bis 500,
   - n: für eine Zahl von 1 bis 500 stehen,
(B) ein ethylenisch ungesättigtes Monomer ist, das mindestens eine Carbonsäurefunktion enthält,
(C) gegebenenfalls ein weiteres, von (A) und (B) verschiedenes ethylenisch ungesättigtes Monomer ist,
(D) ein Monomer der Formel (II) ist 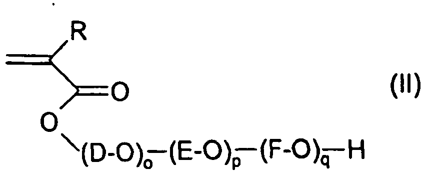 worin
   - D: für C₂- bis C₄-Alkylen,
   - E: für eine von D verschiedene C₂- bis C₄-Alkylengruppe,
   - F: für eine von E verschiedene C₂- bis C₄-Alkylengruppe,
   - R: für Wasserstoff oder Methyl,
   - o: für eine Zahl von 1 bis 500,
   - p: für eine Zahl von 1 bis 500,
   - q: für eine Zahl von 1 bis 500 stehen,
und worin der Gewichtsanteil der Monomere 35 bis 98,5 % für das Monomer (A), 0,5 bis 45 % für das Monomer (B), 0 bis 20 % für das Monomer (C) und 1 bis 20 % für das Monomer (D) beträgt.

Weiterer Gegenstand der vorliegenden Erfindung ist die Verwendung der oben genannten Polymere als Entschäumer und Dispergator für anorganische Feststoffsuspensionen.

Weiterer Gegenstand der vorliegenden Erfindung ist ein Verfahren zur Entschäumung und Dispergierung anorganischer Feststoffsuspensionen, indem einer anorganischen Feststoffsuspension das oben beschriebene Polymer zugesetzt wird.

Die Alkylenoxideinheiten (A-O)ₘ und (B-O)ₙ können entweder statistisch oder, wie im Falle einer bevorzugten Ausführungsform, blockartig angeordnet vorliegen. In einer bevorzugten Ausführungsform steht (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten, wobei der molare Anteil der Ethylenoxid-Einheiten bevorzugt 50 bis 99 %, insbesondere 60 bis 99 %, besonders bevorzugt 70 bis 99 %, bezogen auf die Summe (100 %) der Ethylenoxid- und Propylenoxid-Einheiten, beträgt.

m ist vorzugsweise eine Zahl von 1 bis 150, insbesondere 2 bis 10. n ist vorzugsweise eine Zahl von 3 bis 300, insbesondere 5 bis 150. Die Summe der Alkylenoxideinheiten n + m liegt bevorzugt zwischen 2 und 500, besonders bevorzugt zwischen 10 und 150.

Zu den bevorzugten Monomeren (B) gehören insbesondere monoethylenisch ungesättigte Monomere. Beispiele hierfür sind monoethylenisch ungesättigte Mono- und Dicarbonsäuren mit 3 bis 8 C-Atomen wie Acrylsäure, Methacrylsäure, Crotonsäure, Isocrotonsäure, Maleinsäure und Fumarsäure.

Zu den bevorzugten Monomeren (C) gehören monoethylenisch ungesättigte Sulfonsäuren und Phosphonsäuren und deren Salze, insbesondere deren Alkalimetallsalze wie Vinylsulfonsäure, Allylsulfonsäure, Methallylsulfonsäure, Styrolsulfonsäue, 2-Acryloxyethansulfonsäure, 2-Acrylamido-2-methylpropansulfonsäure, Vinylphosphonsäure, Allylphosphonsäure, 2-Acryloxyethanphosphonsäure und 2-Acrylamido-2-methylpropanphosphonsäure. Des Weiteren gehören zu den Monomeren (C) Monoallylpolyalkylenglykole.

Die Alkylenoxideinheiten (D-O)ₒ, (E-O)ₚ und (F-O)q können entweder statistisch oder, wie im Falle einer bevorzugten Ausführungsform, blockartig angeordnet vorliegen. In einer bevorzugten Ausführungsform steht (D-O)ₒ für Propylenoxid-Einheiten, (E-O)ₚ für Ethylenoxid-Einheiten und (F-O)q für Propylenoxid-Einheiten, wobei der molare Anteil der Ethylenoxid-Einheiten bevorzugt 10 bis 90 %, insbesondere 20 bis 80 %, besonders bevorzugt 30 bis 70 %, bezogen auf die Summe (100 %) der Ethylenoxid- und Propylenoxid-Einheiten, beträgt.

o ist vorzugsweise eine Zahl von 1 bis 100, insbesondere 2 bis 10. p ist vorzugsweise eine Zahl von 1 bis 100, insbesondere 5 bis 50. q ist vorzugsweise eine Zahl von 1 bis 100, insbesondere 2 bis 40. Die Summe der Alkylenoxideinheiten o + p + q liegt bevorzugt zwischen 3 und 500, besonders bevorzugt zwischen 10 und 100.

In einer bevorzugten Ausführungsform ergeben die Gewichtsanteile von (A), (B) und (D) zusammen 100 Gew.-%.

In einer weiteren bevorzugten Ausführungsform ergeben die Gewichtsanteile von (A), (B), (C) und (D) zusammen 100 Gew.-%.

In einer weiteren bevorzugten Ausführungsform liegt der Gewichtsanteil von Monomer (A) im Polymer zwischen 50 und 80 Gew.-%.

In einer weiteren bevorzugten Ausführungsform liegt der Gewichtsanteil von Monomer (B) im Polymer zwischen 5 und 25 Gew.-%.

In einer weiteren bevorzugten Ausführungsform liegt der Gewichtsanteil von Monomer (C) im Polymer zwischen 1 und 25 Gew.-%.

In einer weiteren bevorzugten Ausführungsform liegt der Gewichtsanteil von Monomer (D) im Polymer zwischen 3 und 25 Gew.-%.

Das erfindungsgemäße Copolymer kann übliche endständige Gruppen besitzen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.

Die erfindungsgemäßen Polymere besitzen vorzugsweise ein Molekulargewicht von 10³ g/mol bis 10⁹ g/mol, insbesondere bis 10⁶ g/mol, speziell 10⁵ g/mol.

Eine wesentliche Eigenschaft, die die erfindungsgemäßen Polymere auszeichnet, ist, dass es sich bei den Polyalkylenglykol-Seitenketten des Polymers nicht um reine Polyethylenglykole oder Polypropylenglykole handelt. Stattdessen sind die Polyalkylenglykole entweder statistische oder blockartige Polyalkylenglykole aus Propylenoxid- und Ethylenoxid-Einheiten.

Die Herstellung der erfindungsgemäßen Polymere kann mittels radikalischer Polymerisation der Monomere (A), (B), (D) und ggf. (C) erfolgen. Unter den aus den Monomeren (A), (B), (D) und ggf. (C) abgeleiteten Struktureinheiten sind die Struktureinheiten des Polymers zu verstehen, die durch Einbau der Monomere (A), (B), (D) und ggf. (C) mittels ihrer ethylenischen Doppelbindung entstehen. Die Polymerisationsreaktion kann kontinuierlich, diskontinuierlich oder semikontinuierlich durchgeführt werden.

Die Polymerisationsreaktion wird bevorzugt als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Copolymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, i-Propanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykol-monoalkylether und -dialkylether verwendet werden. Ebenso können aromatische Lösungsmittel wie z. B. Toluol, Xylol oder höher siedende Alkylbenzole eingesetzt werden. Ebenfalls ist der Einsatz von Lösungsmittelgemischen denkbar, wobei sich die Wahl des Lösungsmittels oder der Lösungsmittel nach dem Einsatzzweck des erfindungsgemäßen Copolymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid, tert.-Butylhydroperoxid, Methylethylketon-peroxid, Cumoylperoxid, Dilauroylperoxid (DLP) oder Azoinitiatoren, wie z. B. Azodiisobutyronitril (AIBN), Azobisamidopropyl-hydrochlorid (ABAH) und 2,2'-Azobis(2-methylbutyronitril) (AMBN) verwendet werden. Ebenfalls geeignet sind anorganische Peroxyverbindungen, wie z. B. (NH₄)₂S₂O₈, K₂S₂O₈ oder H₂O₂, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat, 2-Mercaptoethanol, 2-Mercaptopropionsäure, 3-Mercaptopropionsäure und einige Halogenverbindungen, wie z. B. Tetrachlorkohlenstoff, Chloroform und Methylenchlorid.

Die erfindungsgemäßen Polymere werden bevorzugt als 5 - 50 %ige wässrige Lösung und besonders bevorzugt als 20 bis 45 %ige wässrige Lösung als Dispergier-, Fliess-, Sequestrier- oder Plastifiziermittel für den Bestimmungszweck dargereicht.

Eine weitere Darreichungsform der erfindungsgemäßen Polymere sind Pulver oder Granulate, die durch Trocknen der nach der Polymerisation erhältlichen Lösungen der Polymere hergestellt werden.

Die erfindungsgemäßen Polymere eignen sich als Dispergier- und Fliessmittel für Mineralien, anorganische Pigmente, als Dispergiermittel für Pigmentpräparationen, Abtönpasten für Wandfarben, Drucktinten, Dispergiermittel für Pigmentdispersionen z. B. Titandioxid, Calciumcarbonat, Kaolin, Talkum, Dispersionen in der Keramikherstellung, zur Verhinderung Kalksteinablagerung, als Additive für Reinigungsmittel, als Sequestrierungsmittel in der Textil-, Papier-und Lederindustrie und als Kalksteinverhinderer für Industriewässer und in der Abwasseraufbereitung.

Die erfindungsgemäßen Polymere eignen als Plastifizier- und Fliessmittel für hydraulische Zementsysteme, wie beispielsweise Portlandzement, Kalkmergel, Beton, Estrichmörtel, Gipssuspensionen und Gipsanhydritbindemittelformulierungen, für keramische Massen aus Tonen, Kaolinen, Feldspäten und Quarzgestein, Calciumstearat und die in Wasser schwerlöslichen Fettsäuresalze weiterer zwei- und mehrwertiger Kationen.

Die erfindungsgemäßen Polymere eignen sich weiterhin als Dispergier- und Deflokkulierungsmittel für anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet. Die mit Hilfe der erfindungsgemäßen Polymere hergestellten Pigmentdispersionen lassen sich als Abtönpasten, Pigmentslurries, -dispersionen oder -präparationen in der Farben- und Lackindustrie, in der Keramikindustrie und u. a. in der Textil- und Lederindustrie einsetzten.

Eine besondere Verwendung finden die erfindungsgemäßen Polymere als Dispergiermittel für transparente Eisenoxidpigmente, mit denen sich transparente wässrige oder lösemittelhaltige Lacke für die Holzbeschichtung herstellen lassen.

Die erfindungsgemäßen Polymere werden bevorzugt in einer Menge von 0,01 bis 15 Gew.-%, bevorzugt 0,1 bis 5 Gew.-% bezogen auf das Gewicht der anorganischen Pigmente eingesetzt, wozu hydraulische Bindemittel, Gipshydrat (Bauindustrie) und die vorherig beschriebenen Mineralien und anorganischen Pigmente zählen. Insbesondere für das Dispergieren von anorganischen Pigmenten in Farben und Lacken, Pigmentkonzentraten, Slurries und Pigmentpräparationen werden 0,1 - 10 Gew.-% und bevorzugt 0,3 - 5 Gew.-% bezogen auf die anorganischen Pigmente eingesetzt.

Eine besondere Ausführungsform der erfindungsgemäßen Polymere ist die Verwendung als Dispergiermittel in wässrigen Dispersionsfarben. Wässrige Dispersionsfarben enthalten verschiedene Weißpigmente, insbesondere Titandioxid, Bariumsulfat und Zinksulfit, Buntpigmente wie oben beschrieben, insbesondere Eisenoxidpigmente, Chromdioxid und Cobaltspinellpigmente, Füllstoffe wie natürliches oder gefälltes Calciumcarbonat, Talkum, Kaolin, Quarzmehl und andere Mineralpigmente. Als Bindemittel für die Weißpigmente und Füllstoffe kommen Emulsionspolymerisate zum Einsatz. Diese Emulsionspolymerisate bestehen üblicherweise aus Polymeren oder Copolymeren von Styrol, Acrylsäureester, Methacrylsäureester, Acrylsäure, Methacrylsäure, Maleinsäurediester, Vinylacetat, Isodekansäurevinylester, Neodecansäurevinylester, Isononansäurevinylester, Vinylchlorid, Butadien und anderer olefinisch ungesättigter Monomere. Weitere Bindemittel sind wässrige Alkydharzdispersionen, Polyurethandispersionen, Kaliumwasserglas für Silikatfarben, Silikonharzdispersionen und weitere wässrige Polymerdispersionen.

Üblicherweise werden die erfindungsgemäßen Polymere der wässrigen Farbe in Einsatzmengen von 0,05 - 5 Gew.-% bezogen auf die anorganischen Pigmente und Füllstoffe zugesetzt und in einer bevorzugt ausgeführten Form in Einsatzmengen von 0,1 - 1 Gew.-% bezogen auf die anorganischen Pigmente und Füllstoffe.

In Industrie- und Abwässern, in der Textil-, Leder- und Papierindustrie sowie in Haushalts- und gewerblichen Reinigern werden Additive zur Kalksteinverhinderung eingesetzt. Die erfindungsgemäßen Polymere eignen sich als Dispergier- und Sequestriermittel für in Wasser schwer lösliche Erdalkalicarbonate und -sulfate. Geeignete Einsatzmengen betragen 0,001 - 0,1 Gew.-% Polymere in Industriewässern und Abwässer bzw. 0,01 - 2 Gew.-% Polymere bezogen auf die in der Textil-, Leder- und Papierindustrie oder im Hygienebereicht eingesetzte Anwendungsflotten.

Die erfindungsgemäßen Polymere eignen sich insbesondere für die Verwendung in der Vorbehandlung, Bleiche, Entschlichtung, Abkochung, Mercerisiation von Textilen, insbesondere von Textilgewebe aus Baumwolle, Leinen, Wolle und Synthesefasern und deren Mischgewebe, sowie für die Textilfärbung und Hochveredlung. Insbesondere in der Vorbehandlung und Bleiche eignen sich die erfindungsgemäßen Polymere zur Verhinderung von Ablagerung auf dem Gewebe und den Maschinenelementen.

Die erfindungsgemäßen Polymere eignen sich gleichfalls für die Herstellung von flüssigen Reinigungsformulierungen, die anionische, nichtionische, amphotere und kationische Tenside enthalten, wobei dem erfindungsgemäßen Polymere die Aufgabe zukommt, die Bildung von Kalkstein in der Anwendungsflotte zu verhindern. Beispiele für die Verwendung der erfindungsgemäßen Polymere können Fahrzeugpflegemittel, Industriereiniger, Molkereireiniger, Fleischereireiniger, Haushaltsbodenpflegemittel, Geschirrspülmittel, flüssige und pulverförmige Haushaltswaschmittel für Textilien, Sanitärreiniger, Toilettenreiniger und sonstige Reiniger im Haushaltsbereich oder im gewerblichen oder industriellen Bereich sein.

Üblicherweise werden als Kalksteinverhinderer Polymere der Acrylsäure, Copolymere aus Maleinsäure und Acrylsäure oder Chelatbildner wie Aminotriessigsäure, Ethylendiamintetraacetat, Aminotrismethylenphosphonsäure, Diethylentriaminpentamethylenphosphonsäure, 1-Hydroxyethan-1,1-di-phosphonsäure und deren Natrium und Kaliumsalze eingesetzt, die aufgrund ihrer ionischen Charaktere wenig mischbar mit tensidischen Substanzen sind. Die erfindungsgemäßen Polycarboxylate dagegen zeigen sich durch eine gute Verträglichkeit gegenüber anionischen, nichtionischen, amphoteren und kationischen Tensiden aus und eignen sich daher für die Herstellung flüssiger Reinigungsmittelformulierungen.

Eine weitere Anwendung der erfindungsgemäßen Polymere als Dispergiermittel für Schleifmittel, z. B. für Siliciumcarbid, kommt das chemisch-mechanische Schleifen (Chemical mechanical Planarization) von Siliciumwafern infrage.

Weitere Anwendungsgebiete der erfindungsgemäßen Polymere als Dispergiermittel und Kalksteinverhinderer sind Pflanzenschutzformulierungen, Kühlschmiermittel in der Metallbearbeitung, die Abwasseraufbereitung, die Erdölförderung, die Erdölspaltung und die Erzaufbereitung.

Gegebenenfalls werden die erfindungsgemäßen Polymere in Kombination mit weiteren grenzflächenaktiven Substanzen kombiniert. Ziel dieser Kombination ist eine Verbesserung der Eigenschaften der Anwendungsformulierung. Geeignete grenzflächenaktive Substanzen können beispielsweise Netzmittel in der Bauindustrie und weitere Netz- und Dispergieradditive in der Farben- und Lackindustrie und für Pigmentpräparationen, -slurries oder -dispersionen sein.

So enthalten die erfindungsgemäßen Anwendungsformulierungen in bevorzugten Ausführungsformen gegebenenfalls ein oder mehrere nichtionische Tenside aus der Gruppe der Alkylphenolpolyethylenglykolether, styrolsubstituierten Phenolpolyethylenglycolether, Alkylpolyethylenglykolether, Alkylaminethoxylate primärer Alkylamine mit einer Kohlenstoffkettenlänge von 8 bis 22 C-Atomen, Fettsäurepolyethylenglykolether, Fettsäurepolyglycoside, Alkylpolyalkylglycolether von C₈-C₂₂-Alkoholen, die mit Ethylenoxid und Propylenoxid blockweise umgesetzt wurden, endgruppenverschlossenen Alkylethoxylaten von C₈-C₂₂-Alkoholen, die mit Ethylenoxid umgesetzt wurden und mit Methylchlorid, Butylchlorid oder Benzylchlorid verethert wurden, Ethylen/Propylenglykol-Blockpolymere und Sorbitanesterpolyethylenglykolether.

In einer weiteren bevorzugten Ausführungsform enthalten die erfindungsgemäßen Anwendungsformulierungen gegebenenfalls ein oder mehrere anionische Tenside aus der Gruppe der Natrium-, Kalium- und Ammoniumsalze von Fettsäuren, Natriumalkylbenzolsulfonate, Natriumalkylsulfonate, Natriumolefinsulfonate, Natriumpolynaphthalinsulfonate, Natriumligninsulfonat, Natriumdialkyldiphenyletherdisulfonate, Natrium-, Kalium- und Ammoniumalkylsulfate, Natrium-, Kalium- und Ammoniumalkylpolyethylenglykolethersulfate, Natrium-, Kalium- und Ammoniumalkylphenolpolyethylenglykolethersulfate, Natrium-, Kalium- und Ammoniummono- und dialkylsulfosuccinate und Monoalkylpolyoxethylsulfosuccinate, sowie Alkylpolyethylenglykoletherphosphorsäuremono-, di- und triester und deren Mischungen und Alkylphenolpolyethylenglykoletherphosphorsäuremono-, di- und triester und deren Mischungen, sowie deren Natrium-, Kalium- und Ammoniumsalze, Alkylpolyethylenglycolethercarbonsäuren und deren Natrium-, Kalium- und Ammoniumsalze, Schwefelsäurehalbester und Phosphorsäureester von styrolsubstituierten Phenolethoxylaten, styrolsubstituierte Phenolpolyethylenglycolethercarbonsäuren und ihre Natrium-, Kalium- und Ammoniumsalze, Natriumfettsäureisethionate, Natriumfettsäuremethylthauride und Natriumfettsäuresarkoside.

In einer weiteren bevorzugten Ausführungsform enthalten die erfindungsgemäßen Anwendungsformulierungen gegebenenfalls ein oder mehrere Lösemittel, hydrotrope Substanzen, Viskositätsmodifizierer oder Feuchthaltemittel ausgewählt aus der Gruppe der Glykolether, insbesondere Polyethylenglykolether oder Polypropylenglykolether mit einer mittleren Molmasse zwischen 200 und 2.000 g/mol, Mono-, Di- oder Triethylenglykol, Mono-, Di- oder Tripropylenglykol, Methyl-, Ethyl- Propyl-, Butyl- oder höherwertige Alkylpolyalkylenglykolether mit 1, 2, 3 oder mehreren Ethylenglykol- oder Propylenglykoleinheiten wie beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20.000 g/mol, Pentaerythritolalkoxylate oder weitere Ethoxylierungs-und Alkoxylierungsprodukte und statistische oder Blockcopolymere die durch Addition von Ethylenoxid und/oder Propylenoxide an ein- und höherwertige Alkohole hergestellt wurden.

Weitere wasserlösliche organische oder hydrotrope Substanzen, die mit den erfindungsgemäßen Copolymeren kombiniert werden können und die gegebenenfalls auch als Lösungsmittel, Konsistenzgeber oder Rheologieadditive dienen, sind beispielsweise Formamid, Harnstoff, Tetramethylharnstoff, ε-Caprolactam, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat, Gelatinederivate, Cellulosederivate wie beispielsweise Methylcellulose, Hyroxyethylcelluloseether, Methoxyethylcelluloseether, Methoxypropylcelluloseether, Polyvinylpyrrolidon, Polyvinylalkohol, Polyvinylimidazol und Co- und Terpolymere aus Vinylpyrrolidon, Vinylacetat und Vinylimidazol, wobei anschließend die Polymere mit Vinylacetatbausteinen einer Verseifung zum Vinylalkohol unterzogen werden können.

Als weitere übliche Zusatzstoffe kommen Antiabsetzmittel, Lichtschutzmittel, Antioxidantien, Füllstoffe, Mahlhilfsmittel, Viskositätsstabilisatoren und Additive, welche die Rheologie günstig beeinflussen, in Betracht. Als Mittel zur Regulierung der Viskosität kommen z. B. Stärke- und Cellulosederivate und hydrophobmodifizierte ethoxylierte Urethane (HEUR)-Verdicker infrage. Als pH-Regulatoren kommen organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak.

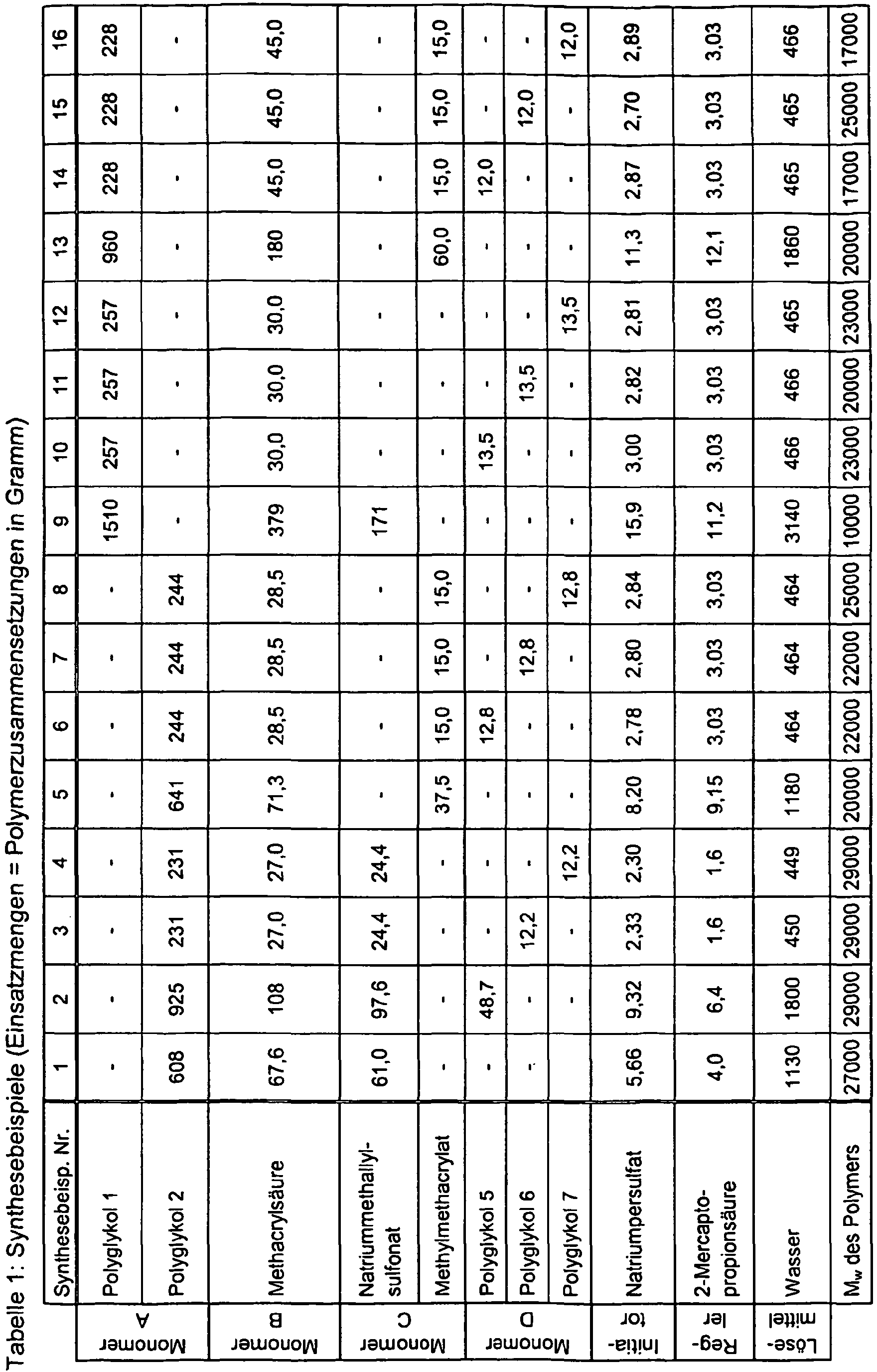

### Zusammensetzung Monomer A:

- Polyglykol 1: Polyalkylenglykolmonomethacrylsäureester (Formel (I), m = 5, n = 36-38; (A-O) entspricht (CH₂CH(CH₃)O)), (B-O) entspricht (CH₂CH₂O)), Molmasse ca. 2.000 g/mol
- Polyglykol 2: Polyalkylenglykolmonomethacrylsäureester (Formel (I), m = 5, n = 104-106; (A-O) entspricht (CH₂CH(CH₃)O)), (B-O) entspricht (CH₂CH₂O)). Molmasse ca. 5.000 g/mol

### Zusammensetzung Monomer D:

- Polyglykol 5: Polyalkylenglykolmonomethacrylsäureester (Formel (II), o = 4-5, p = 19-21, q = 15-17; (D-O) entspricht [CH₂CH(CH₃)O)], (E-O) entspricht (CH₂CH₂O), (F-O) entspricht [CH₂CH(CH₃)O)], Molmasse ca. 2.200 g/mol
- Polyglykol 6: Polyalkylenglykolmonomethacrylsäureester (Formel (II), o = 4-5, p = 9-11, q = 15-17; (D-O) entspricht [CH₂CH(CH₃)O)], (E-O) entspricht (CH₂CH₂O), (F-O) entspricht [CH₂CH(CH₃)O)], Molmasse ca. 1.700 g/mol
- Polyglykol 7: Polyalkylenglykolmonomethacrylsäureester (Formel (II), o = 4-5, p = 19-21, q = 21-23; (D-O) entspricht [CH₂CH(CH₃)O)], (E-O) entspricht (CH₂CH₂O), (F-O) entspricht [CH₂CH(CH₃)O)], Molmasse ca. 2.500 g/mol

### Synthese der Polymere

In einem Glaskolben werden das Monomer (A), Monomer (B), Monomer (C), Monomer (D) und der Regler in Lösungsmittel unter Stickstoff vorgelegt. Dann wird die Reaktionsmischung auf 75 °C erhitzt und Initiator (die angegebene Menge gelöst in Wasser, sodass eine Konzentration von 6,35 Gew.-% erhalten wird) zudosiert. Nach vollständiger Zugabe wird noch für eine Stunde bei 75 °C gerührt. Danach wird auf Raumtemperatur abgekühlt und der pH-Wert mit Natronlauge (50 Gew.-% in Wasser) auf 5,5 eingestellt. Die Polymerlösungen wurden auf einen Wirkstoffgehalt von 40 % eingestellt.

Vergleichsbeispiele ohne Monomer (D): Siehe Tabelle: Polymer Nr 1, 5, 9 und 13.

### Anwendungsbeispiele

In den folgenden Beispielen stehen Prozentangaben für Gewichtsprozente, sofern nicht anders angegeben.

### Anwendungsbeispiele 1

Das Schaumverhalten der Polymere wurde durch einen Frittentest untersucht und mit dem Schaumverhalten der Polymere, die ohne Monomer (D) hergestellt wurden, verglichen. Die Prüflösung bestand aus vollentsalztem Wasser (98,1 %), eingestellt mit NaOH (0,8 %) auf pH 12 und mit CaCl₂·2H₂O (0,4 %) auf eine Wasserhärte von 150° dH eingestellt und eingedickt mit Tylose H100000 (0,7 %). Zu dieser Lösung wurde die zu testende Polymerlösung (5 g Polymerlösung auf 1 l Prüflösung) gegeben und dann durch die Fritte Luft mit einem Volumenstrom von 30 l/h geblasen. Der Schaumaufbau wurde nach 1 Minute und der anschließende Schaumzerfall nach 1, 2 und 5 Minuten notiert.

**Tabelle 2: Anwendungsbeispiele 1**

| Beispiel | Polymer aus Beispiel | Aufbau von Schaum in ml nach | Zerfall des Schaumes in ml nach | | |
|---|---|---|---|---|---|
| | | 1 Min. | 1 Min. | 2 Min. | 5 Min. |
| 17 | 2 | 700 | 590 | 490 | 250 |
| 18 | 3 | 30 | 30 | 20 | 10 |
| 19 | 4 | 20 | 30 | 30 | 20 |
| 20 | 6 | 900 | 700 | 520 | 80 |
| 21 | 7 | 750 | 630 | 510 | 200 |
| 22 | 8 | 840 | 670 | 530 | 190 |
| 23 | 10 | 510 | 300 | 190 | 40 |
| 24 | 11 | 470 | 210 | 70 | <10 |
| 25 | 12 | 840 | 670 | 530 | 190 |
| 26 | 14 | 920 | 690 | 460 | 60 |
| 27 | 15 | 110 | 50 | 20 | 10 |
| 28 | 16 | 690 | 510 | 380 | 50 |

### Anwendungsbeispiele 2

Schaumbildung im Mörtel führt zu hohen Luftporengehalten. Um die Wirksamkeit der im Polymer eingebauten Monomere (D) bei der Unterdrückung von Schaum im Mörtel zu demonstrieren, wurden diese Copolymere als Superplasticizer im Mörtel eingesetzt und der Luftporengehalt verglichen mit dem eines Mörtels, bei dem ein vergleichbares Copolymer ohne dieses Monomer (D) verwendet wurde.
Zur Bestimmung des Luftporengehaltes im Mörtel wurde zunächst ein Mörtel mit folgender Zusammensetzung hergestellt:

| | |
|---|---|
| 540 g | Zement (CEM II/A-S 32.5 R) |
| 1350 g | CEN-Normsand (nach DIN EN 196-1) |
| 221,5 g | Wasser |
| 2,6 g | Polymerlösung |

Danach wurde der Luftgehalt des Frischmörtels im Luftporen-Messtopf nach dem Druckausgleichsverfahren analog DIN EN 1015-7 bestimmt:

**Tabelle 3: Anwendungsbeispiele 2**

| Beispiel | Polymer aus Beispiel | Luftporengehalt im Mörtel [%] |
|---|---|---|
| 29 | 1 | 49 |
| 30 | 2 | 37 |
| 31 | 3 | 23 |
| 32 | 4 | 38 |
| 33 | 5 | 61 |
| 34 | 6 | 53 |
| 35 | 7 | 26 |
| 36 | 8 | 44 |
| 37 | 9 | 48 |
| 38 | 10 | 47 |
| 39 | 11 | 13 |
| 40 | 12 | 47 |
| 41 | 13 | 74 |
| 42 | 14 | 55 |
| 43 | 15 | 19 |
| 44 | 16 | 60 |

Um außerdem zu zeigen, dass die Leistung des Superplasticizers durch Einbau des Monomers (D) nicht beeinträchtigt wird, wurde das Ausbreitmaß des dieses Mörtels 5, 30 und 60 Min. nach Zugabe der Polymerlösungen bestimmt (Bestimmung analog DIN EN 1015-3). Die Ergebnisse bestätigen, dass der Einbau von Monomer (D) in dem Polymer kaum Auswirkung auf das Ausbreitmaß hat.

**Tabelle 4: Ausbreitmaße**

| Beispiel | Polymer aus Beispiel | Ausbreitmaß [cm] nach 5 Min. | Ausbreitmaß [cm] nach 30 Min. | Ausbreitmaß [cm] nach 60 Min. |
|---|---|---|---|---|
| 45 | 1 | 26,1 | 23,4 | 21,4 |
| 46 | 2 | 27,4 | 26,5 | 24,5 |
| 47 | 3 | 28,4 | 26,6 | 24,4 |
| 48 | 4 | 28,1 | 27,1 | 26,3 |
| 49 | 5 | 23,1 | 22,5 | 22,4 |
| 50 | 6 | 24,8 | 24,0 | 22,8 |
| 51 | 7 | 26,9 | 23,3 | 22,0 |
| 52 | 8 | 25,4 | 24,5 | 23,4 |
| 53 | 9 | 24,8 | 23,3 | 21,8 |
| 54 | 10 | 24,0 | 22,7 | 21,7 |
| 55 | 11 | 28,3 | 25,3 | 24,3 |
| 56 | 12 | 27,0 | 25,8 | 24,8 |
| 57 | 13 | 24,3 | 24,0 | 23,5 |
| 58 | 14 | 26,8 | 25,3 | 25,3 |
| 59 | 15 | 29,0 | 28,0 | 25,3 |
| 60 | 16 | 26,5 | 26,5 | 26,0 |

## Patentansprüche

1. Polymere, enthaltend Struktureinheiten, die aus den Monomeren (A), (B), und (D), und gegebenenfalls (C) abgeleitet sind, wobei
(A) ein Monomer der Formel (I) ist 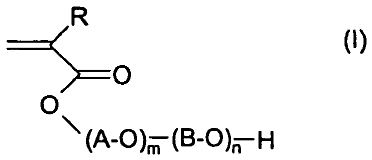 worin
A für C₂- bis C₄-Alkylen,
B für ein von A verschiedenes C₂- bis C₄-Alkylen,
R für Wasserstoff oder Methyl,
m für eine Zahl von 1 bis 500,
n für eine Zahl von 1 bis 500 stehen,
(B) ein ethylenisch ungesättigtes Monomer ist, das mindestens eine Carbonsäurefunktion enthält,
(C) gegebenenfalls ein weiteres, von (A) und (B) verschiedenes ethylenisch ungesättigtes Monomer ist,
(D) ein Monomer der Formel (II) ist 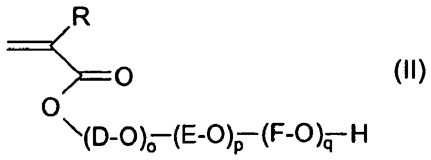 worin
D für C₂- bis C₄-Alkylen,
E für eine von D verschiedene C₂- bis C₄-Alkylengruppe,
F für eine von E verschiedene C₂- bis C₄-Alkylengruppe,
R für Wasserstoff oder Methyl,
o für eine Zahl von 1 bis 500,
p für eine Zahl von 1 bis 500,
q für eine Zahl von 1 bis 500 stehen,
und worin der Gewichtsanteil der Monomere 35 bis 98,5 % für das Monomer (A), 0,5 bis 45 % für das Monomer (B), 0 bis 20 % für das Monomer (C) und 1 bis 20 % für das Monomer (D) beträgt.

2. Polymere nach Anspruch 1, worin (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten stehen, und der molare Anteil der Ethylenoxid-Einheiten 50 bis 99 Gew.-% bezogen auf die Summe (100 %) aller Ethylenoxid- und Propylenoxid-Einheiten (A-O)ₘ und (B-O)ₙ beträgt.

3. Polymere nach Anspruch 1 und/oder 2, worin m eine Zahl von 1 bis 150 ist.

4. Polymere nach einem oder mehreren der Ansprüche 1 bis 3, worin n eine Zahl von 3 bis 300 ist.

5. Polymere nach einem oder mehreren der Ansprüche 1 bis 4, worin n + m zwischen 2 und 500 liegt.

6. Polymere nach einem oder mehreren der Ansprüche 1 bis 5, worin die Monomere (B) aus monoethylenisch ungesättigte Mono- und Dicarbonsäuren mit 3 bis 8 C-Atomen ausgewählt sind.

7. Polymere nach einem oder mehreren der Ansprüche 1 bis 6, worin die Monomere (C) aus monoethylenisch ungesättigte Sulfonsäuren, Phosphonsäuren und/oder deren Salzen, und aus Monoallylpolyalkylenglykolen ausgewählt sind.

8. Polymere nach einem oder mehreren der Ansprüche 1 bis 7, worin die Monomere (C) in einer Menge von mindestens 0,5 Gew.-% und die Monomere (A) in einer Menge von höchstens 98 Gew.-%vorliegen.

9. Polymere nach einem oder mehreren der Ansprüche 1 bis 8, worin die Alkylenoxideinheiten (D-O)ₒ, (E-O)ₚ und (F-O)_{q} blockartig angeordnet vorliegen, und (D-O)ₒ für Propylenoxid-Einheiten, (E-O)ₚ für Ethylenoxid-Einheiten und (F-O)_{q} für Propylenoxid-Einheiten stehen, und wobei der molare Anteil der Ethylenoxid-Einheiten 10 bis 90 % bezogen auf die Summe (100 %) der Ethylenoxid- und Propylenoxid-Einheiten (D-O)ₒ, (E-O)ₚ und (F-O)_{q}, beträgt.

10. Polymere nach einem oder mehreren der Ansprüche 1 bis 9, worin o eine Zahl von 1 bis 100 ist.

11. Polymere nach einem oder mehreren der Ansprüche 1 bis 10, worin p eine Zahl von 1 bis 100 ist.

12. Polymere nach einem oder mehreren der Ansprüche 1 bis 11, worin q eine Zahl von 1 bis 100 ist.

13. Polymere nach einem oder mehreren der Ansprüche 1 bis 12, worin die Summe o + p + q zwischen 3 und 500 liegt.

14. Polymere nach einem oder mehreren der Ansprüche 1 bis 13, welche ein Molekulargewicht von 10³ g/mol bis 10⁹ g/mol, insbesondere bis 10⁶ g/mol, speziell 10⁵ g/mol aufweisen.

15. Verwendung der Polymere nach einem oder mehreren der Ansprüche 1 bis 14 in einer Menge von 0,01 bis 15 Gew.-%, bezogen auf das Gewicht der anorganischen Feststoffsuspension, als Entschäumer und Dispergatoren für anorganische Feststoffsuspensionen.

16. Verfahren zur Entschäumung und Dispergierung anorganischer Feststoffsuspensionen, indem einer anorganischen Feststoffsuspension mindestens ein Polymer nach einem oder mehreren der Ansprüche 1 bis 14 in einer Menge von 0,01 bis 15 Gew.-%, bezogen auf das Gewicht der anorganischen Feststoffsuspension, zugesetzt wird.

## Claims

1. A polymer containing structural units derived from monomers (A), (B) and (D), and optionally (C), wherein
(A) is a monomer of formula (I) 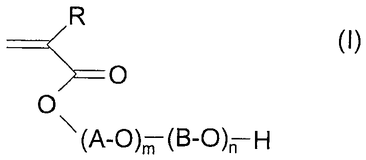 where
A represents C₂- to C₄-alkylene,
B represents a C₂- to C₄-alkylene other than A,
R represents hydrogen or methyl,
m represents a number from 1 to 500,
n represents a number from 1 to 500,
(B) is an ethylenically unsaturated monomer which contains at least one carboxylic acid function,
(C) optionally a further ethylenically unsaturated monomer other than (A) and (B),
(D) is a monomer of formula (II) 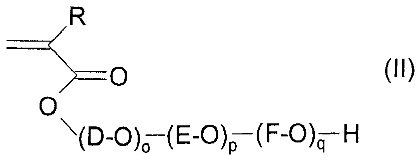 where
D represents C₂- to C₄-alkylene,
E represents a C₂- to C₄-alkylene group other than D,
F represents a C₂- to C₄-alkylene group other than E,
R represents hydrogen or methyl,
o represents a number from 1 to 500,
p represents a number from 1 to 500,
q represents a number from 1 to 500
and wherein the weight fraction of monomers is 35 to 98.5% in respect of monomer (A), 0.5 to 45% in respect of monomer (B), 0 to 20% in respect of monomer (C) and 1 to 20% in respect of monomer (D).

2. The polymer as claimed in claim 1, wherein (A-O)ₘ represents propylene oxide units and (B-O)ₙ represents ethylene oxide units, or (A-O)ₘ represents ethylene oxide units and (B-O)ₙ represents propylene oxide units, and the molar fraction of ethylene oxide units is from 50 to 99 wt% based on the sum total (100%) of all ethylene oxide and propylene oxide units (A-O)ₘ and (B-O)ₙ.

3. The polymer as claimed in claim 1 and/or 2, wherein m is a number from 1 to 150.

4. The polymer as claimed in one or more of claims 1 to 3, wherein n is a number from 3 to 300.

5. The polymer as claimed in one or more of claims 1 to 4, wherein n + m is between 2 and 500.

6. The polymer as claimed in one or more of claims 1 to 5, wherein said monomers (B) are selected from monoethylenically unsaturated mono- and dicarboxylic acids having 3 to 8 carbon atoms.

7. The polymer as claimed in one or more of claims 1 to 6, wherein said monomers (C) are selected from monoethylenically unsaturated sulfonic acids, phosphonic acids and/or their salts, and from monoallyl polyalkylene glycols.

8. The polymer as claimed in one or more of claims 1 to 7, wherein said monomers (C) are in an amount of at least 0.5 wt% and said monomers (A) are in an amount of at most 98 wt%.

9. The polymer as claimed in one or more of claims 1 to 8, wherein the alkylene oxide units (D-O)ₒ, (E-O)ₚ and (F-O)q are in a block type arrangement and (D-O)ₒ represents propylene oxide units, (E-O)ₚ represents ethylene oxide units and (F-O)q represents propylene oxide units, and wherein the molar fraction of ethylene oxide units is 10 to 90% based on the sum total (100%) of ethylene oxide and propylene oxide units (D-O)ₒ, (E-O)ₚ and (F-O)q.

10. The polymer as claimed in one or more of claims 1 to 9, wherein o is a number from 1 to 100.

11. The polymer as claimed in one or more of claims 1 to 10, wherein p is a number from 1 to 100.

12. The polymer as claimed in one or more of claims 1 to 11, wherein q is a number from 1 to 100.

13. The polymer as claimed in one or more of claims 1 to 12, wherein the sum o + p + q is between 3 and 500.

14. The polymer as claimed in one or more of claims 1 to 13, having a molecular weight of 10³ g/mol to 10⁹ g/mol, especially to 10⁶ g/mol, specifically 10⁵ g/mol.

15. The use of the polymer as claimed in one or more of claims 1 to 14 in an amount of 0.01 to 15 wt%, based on the weight of the inorganic solid suspension, as defoamers and dispersants for inorganic solid suspensions.

16. A process for defoaming and dispersing inorganic solid suspensions by adding to an inorganic solid suspension at least one polymer as claimed in one or more of claims 1 to 14 in an amount of 0.01 to 15 wt%, based on the weight of the inorganic solid suspension.

## Revendications

1. Polymères, contenant des unités de structure qui sont dérivées des monomères (A), (B) et (D) et le cas échéant (C), où
(A) est un monomère de formule (I) 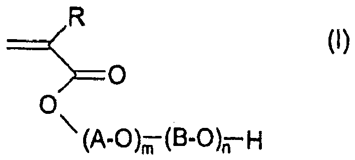 où
A représente C₂-C₄-alkylène,
B représente un C₂-C₄-alkylène différent de A,
R représente hydrogène ou méthyle,
m vaut un nombre de 1 à 500,
n vaut un nombre de 1 à 500,
(B) est un monomère éthyléniquement insaturé, qui contient au moins une fonction acide carboxylique,
(C) est le cas échéant un autre monomère éthyléniquement insaturé, différent de (A) et (B),
(D) est un monomère de formule (II) 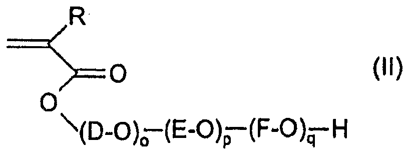 où
D représente C₂-C₄-alkylène,
E représente un C₂-C₄-alkylène différent de D,
F représente un C₂-C₄-alkylène différent de E,
R représente hydrogène ou méthyle,
o vaut un nombre de 1 à 500,
p vaut un nombre de 1 à 500,
q vaut un nombre de 1 à 500,
et où la proportion pondérale des monomères vaut 35 à 98,5% pour le monomère (A), 0,5 à 45% pour le monomère (B), 0 à 20% pour le monomère (C) et 1 à 20% pour le monomère (D).

2. Polymères selon la revendication 1, dans lesquels (A-O)ₘ représente des unités d'oxyde de propylène et (B-O)ₙ représente des unités d'oxyde d'éthylène ou (A-O)ₘ représente des unités d'oxyde d'éthylène et (B-O)ₙ représente des unités d'oxyde de propylène, la proportion molaire des unités d'oxyde d'éthylène étant de 50 à 99%, par rapport à la somme (100%) de toutes les unités d'oxyde d'éthylène et d'oxyde de propylène (A-O)ₘ et (B-O)ₙ.

3. Polymères selon la revendication 1 et/ou 2, dans lesquels m vaut un nombre de 1 à 150.

4. Polymères selon l'une ou plusieurs des revendications 1 à 3, dans lesquels n vaut un nombre de 3 à 300.

5. Polymères selon l'une ou plusieurs des revendications 1 à 4, dans lesquels n + m est situé entre 2 et 500.

6. Polymères selon l'une ou plusieurs des revendications 1 à 5, où les monomères (B) sont choisis parmi les acides monocarboxyliques et dicarboxyliques éthyléniquement monoinsaturés comprenant 3 à 8 atomes de carbone.

7. Polymères selon l'une ou plusieurs des revendications 1 à 6, les monomères (C) étant choisis parmi les acides sulfoniques, les acides phosphoniques éthyléniquement monoinsaturés et/ou leurs sels et parmi les monoallylpolyalkylèneglycols.

8. Polymères selon l'une ou plusieurs des revendications 1 à 7, les monomères (C) se trouvant en une quantité d'au moins 0,5% en poids et les monomères (A) en une quantité d'au plus 98% en poids.

9. Polymères selon l'une ou plusieurs des revendications 1 à 8, où les unités d'oxyde d'alkylène (D-O)ₒ, (E-O)ₚ et (F-O)q sont disposées sous forme de blocs et (D-O)ₒ représente des unités d'oxyde de propylène, (E-O)ₚ représente des unités d'oxyde d'éthylène et (F-O)q représente des unités d'oxyde de propylène et la proportion molaire des unités d'oxyde d'éthylène valant 10 à 90% par rapport à la somme (100%) des unités d'oxyde d'éthylène et d'oxyde de propylène (D-O)ₒ, (E-O)ₚ et (F-O)q.

10. Polymères selon l'une ou plusieurs des revendications 1 à 9, dans lesquels o vaut un nombre de 1 à 100.

11. Polymères selon l'une ou plusieurs des revendications 1 à 10, dans lesquels p vaut un nombre de 1 à 100.

12. Polymères selon l'une ou plusieurs des revendications 1 à 11, dans lesquels q vaut un nombre de 1 à 100.

13. Polymères selon l'une ou plusieurs des revendications 1 à 12, dans lesquels la somme de o + p + q est située entre 3 et 500.

14. Polymères selon l'une ou plusieurs des revendications 1 à 13, qui présentent un poids moléculaire de 10³ g/mole à 10⁹ g/mole, de préférence de 10⁶ g/mole, tout particulièrement de 10⁵ g/mole.

15. Utilisation des polymères selon l'une ou plusieurs des revendications 1 à 14 en une quantité de 0,01 à 15 % en poids, par rapport au poids de la suspension de solides inorganiques, comme antimousses et dispersants pour des suspensions de solides inorganiques.

16. Procédé pour éliminer la mousse et disperser des suspensions de solides inorganiques en ce qu'on ajoute, à une suspension de solides inorganiques, au moins un polymère selon l'une ou plusieurs des revendications 1 à 14 en une quantité de 0,01 à 15% en poids, par rapport au poids de la suspension de solides inorganiques.
